Europäisches Patentamt

European Patent Office

Office européen des brevets

(19)

(11) Veröffentlichungsnummer : **0 101 569**
**B1**

(12) # EUROPÄISCHE PATENTSCHRIFT

(45) Veröffentlichungstag der Patentschrift :
21.01.87

(51) Int. Cl.⁴ : **B 25 J 17/02**

(21) Anmeldenummer : 83107257.4

(22) Anmeldetag : 23.07.83

(54) Vorrichtung zum Antrieb der beiden Achsen des Handgliedes eines Industrieroboters.

(30) Priorität : 03.08.82 DE 3228945

(43) Veröffentlichungstag der Anmeldung :
29.02.84 Patentblatt 84/09

(45) Bekanntmachung des Hinweises auf die Patenterteilung : 21.01.87 Patentblatt 87/04

(84) Benannte Vertragsstaaten :
AT BE CH DE FR GB IT LI NL SE

(56) Entgegenhaltungen :
EP-A- 0 054 763
FR-A- 1 423 981
GB-A- 2 061 872
MACHINE DESIGN, Band 54, Nr. 18, August 1982, Seite 55, Cleveland, Ohio, USA, L. ERWIN: "Bevel gears make robot's "wrist" more flexibel"

(73) Patentinhaber : EKE Robotersysteme GmbH
Tegernseer Landstrasse 161
D-8000 München 90 (DE)

(72) Erfinder : Beyer, Hasso
Mittenwalder Strasse 28
D-8900 Augsburg (DE)

(74) Vertreter : Goddar, Heinz J., Dr. et al
FORRESTER & BOEHMERT Widenmayerstrasse 4/I
D-8000 München 22 (DE)

## Beschreibung

Die Erfindung betrifft eine Vorrichtung zum Antrieb zweier Achsen eines Handgliedes eines Industrieroboters mit einem am Ende eines Gehäuseteils des Roboters gelagerten Gehäuse, das um eine erste Achse drehbar ist, welche rechtwinklig zur Achse des Gehäuseteils verläuft, und das einen Flansch lagert, der um eine zur ersten Achse rechtwinklig verlaufende zweite Achse drehbar ist, bei der im Gehäuseteil zwei Antriebswellen verlaufen, welche über je ein Kegelradgetriebe je ein Untersetzungsgetriebe antreiben, von denen mindestens eines zusammen mit seinem Abtriebsteil koaxial zur ersten Achse im Gehäuse angeordnet ist.

Eine derartige Vorrichtung ist beispielsweise bekannt aus dem DE-GM 78 01 844. Es handelt sich dort um eine sogenannte Winkelhand. Die beiden koaxial im Ausleger verlaufenden Antriebswellen treiben über je ein Kegelradgetriebe zwei koaxial zueinander verlaufende Wellen an. Die eine als Hohlwelle ausgebildete Welle treibt ein erstes Untersetzungsgetriebe an, welches das Gehäuse in Drehung versetzt. Die andere Welle treibt über ein Kegelradgetriebe eine rechtwinklig zu ihr verlaufende Welle an, die das weitere Untersetzungsgetriebe antreibt, welches seinerseits den dazu koaxial gelagerten Flansch in Drehung versetzt.

Der Aufbau dieser bekannten Vorrichtung ist recht kompliziert. Die Vorrichtung weist eine relativ große Baugröße auf, welche nicht nur durch den winkelmäßigen Aufbau bedingt ist sondern auch durch die erforderliche Größe der Untersetzungsgetriebe, die beide jeweils auf die maximale Traglast ausgelegt sind. Da die zweite Achse im Abstand zur Auslegerachse verläuft, wirkt an der Gehäuselagerung ein großes Lastmoment.

Darüber hinaus ist aus der EP-A-0 054 763 aber noch eine Vorrichtung bekannt, bei der sich das Kegelrad der den Flansch antreibenden Welle an dem Kegelrad der Riemenscheibe abwälzt, die koaxial zur ersten Achse gelagert ist, wenn das Gehäuse um die erste Achse verschwenkt wird. Zwangsläufig dreht sich bei einer solchen Bewegung auch der Flansch um seine Achse. Weiter ist bei dieser Vorrichtung das Untersetzungsgetriebe, über das der Flansch angetrieben wird, koaxial zur zweiten Achse gelagert. Der Abstand des Flansches zur Drehachse des Gehäuses wird damit notwendig relativ groß, was die über den Flansch bewegbaren Lasten vermindert. Des weiteren ist es bei der bekannten Vorrichtung erforderlich, um eine ausreichende Ölschmierung der schnellaufenden Teile zu erreichen, einen Füllstand vorzusehen, der immer auch eine Schmierung der schnellaufenden Welle, die das Untersetzungsgetriebe des Flansches antreibt, bis in die Nähe des Flansches sicherstellt. Je nach Stellung der Vorrichtung und Füllungsgrad können die schnellaufenden Teile im Bereich der ersten Achse entweder « leerlaufen » oder es können aufgrund der Wärmeentwicklung Überhitzungsprobleme auftreten.

Im Hinblick auf diesen Stand der Technik lehrt die Erfindung, daß das weitere Untersetzungsgetriebe ebenfalls zusammen mit seinem Abtriebsteil koaxial zur ersten Achse im Gehäuse angeordnet ist und beide Abtriebsteile je ein Kegelrad tragen und diese Kegelräder mit einem weiteren im Gehäuse gelagerten Kegelrad in Eingriff stehen, welches mit dem Flansch verbunden ist.

Durch den in Anspruch 1 gekennzeichneten Aufbau ergeben sich eine Reihe von Vorteilen. Bei kleiner und leichter Bauart können große Traglasten bewegt werden, da die Momente aus beiden Bewegungsachsen über ein Differential auf zwei Untersetzungsgetriebe verteilt werden. Der Flansch ist nahe der Drehachse des Gehäuses angeordnet, so daß auf dessen Lagerung relativ kleine Lastmomente wirken. Die Vorrichtung ist symmetrisch aufgebaut. Es ist eine optimale Schmierung möglich, da die schnellaufenden Getriebeteile im Zentrum der Vorrichtung liegen, damit kann unabhängig von der Stellung des symmetrischen Gehäuses ein optimaler Ölpegel innerhalb der Vorrichtung eingestellt werden. Zur Steuerung der Bewegungen um die beiden Achsen ist ein erheblich geringerer Steuerungsaufwand erforderlich als dies bei der eingangs genannten Winkelhand der Fall ist.

Ein Ausführungsbeispiel wird nachfolgend anhand der Zeichnungen näher erläutert. Es zeigen :

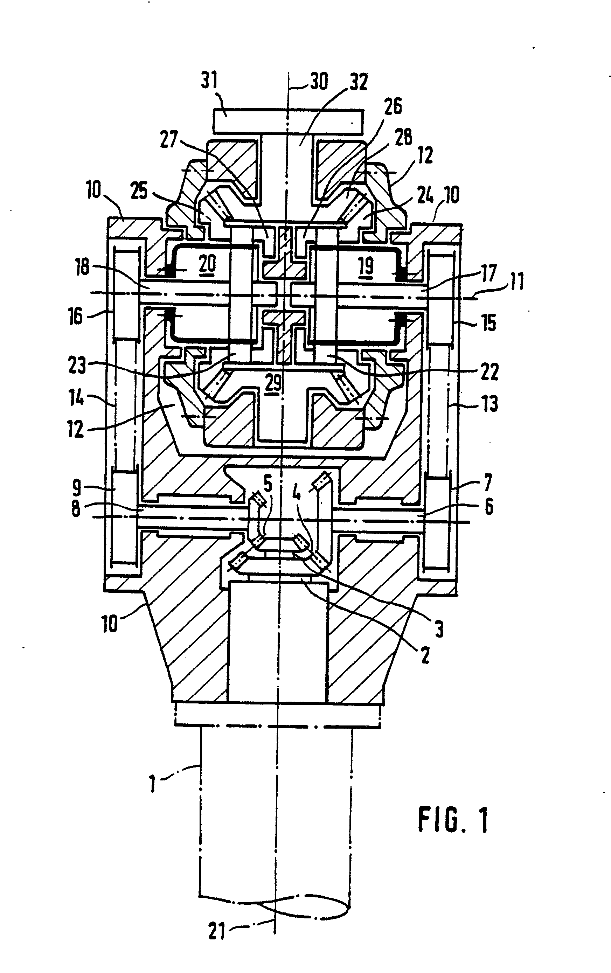

Figur 1 einen Schnitt durch die Vorrichtung und

Figur 2 eine Draufsicht auf die Vorrichtung gemäß Fig. 1.

Im Ausleger 1 des Roboters sind zwei Antriebswellen 2, 3 koaxial zueinander gelagert. Die hohle Antriebswelle 2 treibt über ein Kegelradgetriebe 4 eine Welle 6 an, welche eine Riemenscheibe 7 trägt. Die andere Antriebswelle 3 treibt über ein weiteres Kegelradgetriebe 5 eine weitere Welle 8 an, die ebenfalls eine Riemenscheibe 9 trägt. Die beiden Wellen 6, 8 verlaufen koaxial zueinander und sind in einem Gehäuseteil 10 gelagert, welches starr mit dem Ende des Auslegers 1 verbunden ist.

Von den beiden Riemenscheiben 7, 9 verläuft je ein Zahnriemen 13, 14 zu einer weiteren Riemenscheibe 15 bzw. 16. Die Riemenscheibe 15, 16 sind angeordnet auf Eingangswellen 17, 18 von Untersetzungsgetrieben 19, 20. Es kann sich hierbei um sogenannte Harmonik-Drive-Getriebe handeln, die ein Untersetzungsverhältnis von 1 : 80 aufweisen. Die Eingangswellen 17, 18 und die Getriebe 19, 20 verlaufen jeweils koaxial zueinander und sind symmetrisch zur Achse 21 des Auslegers 1 angeordnet. Die gemeinsame Achse der Eingangswellen 17, 18 ist mit 11 bezeichnet. Die Getriebegehäuse der Untersetzungsgetriebe 19, 20 sind starr mit dem Gehäuseteil 10 verbunden und lagern die nicht dargestellten Getriebeteile dieser Untersetzungsgetriebe 19, 20.

Um die erste Achse 11 drehbar am Gehäuseteil 10 gelagert ist das Gehäuse 12. Dieses Gehäuse 12 lagert die inneren Enden der Wellen 17, 18, welche außen gelagert sind im Gehäuseteil 10. Die Abtriebsteile 22, 23 der Untersetzungsgetriebe 19, 20, welche um die Achse 11 drehbar sind, tragen je ein Kegelrad 24, 25. Die Abtriebsteile 22, 23 und die Kegelräder 24, 25 sind über Lagerzusätze 26, 27 im Gehäuse 12 gelagert. Die beiden Kegelräder 24, 25 stehen in Eingriff mit zwei weiteren Kegelrädern 28, 29, welche koaxial zueinander verlaufen und deren Drehachse 30 rechtwinklig zur ersten Drehachse 11 verläuft. Beide Kegelräder 28, 29 sind im Gehäuse 12 gelagert wobei mit der Welle 32 des Kegelrades 28 der im Gehäuse 12 gelagerte Flansch 31 verbunden ist.

Die Arbeitsweise der Vorrichtung ist wie folgt :

Drehen sich die beiden Kegelräder 24, 25 durch den Antrieb über die Antriebswellen 2, 3 mit gleicher Geschwindigkeit in entgegengesetzter Richtung, dann wird der Flansch 31 bei stillstehendem Gehäuse 12 um seine Achse 30 gedreht. Drehen sich dagegen die Kegelräder 24, 25 infolge des Antriebs über die Antriebswellen 2, 3 mit gleicher Geschwindigkeit in gleicher Richtung, dann wird das Gehäuse 12 und die Achse 11 gedreht, wobei der Flansch 31 keine Drehung um seine Achse 30 ausführt. Drehen sich die Kegelräder 24, 25 in gleicher oder entgegengesetzter Richtung mit unterschiedlicher Geschwindigkeit, dann dreht sich der Flansch 31 um seine Achse 30 während gleichzeitig das Gehäuse 12 sich um die Achse 11 bewegt. Da die Untersetzungen von der Welle 2 bis zum Kegelrad 24 und von der Welle 3 bis zum Kegelrad 25 gleich sind, können die vorbeschriebenen Bewegungsabläufe eingestellt werden durch gleiche Drehzahlen der Wellen 2, 3 in gleicher oder entgegengesetzter Richtung bzw. durch unterschiedliche Drehzahlen in gleicher oder entgegengesetzter Richtung wenn eine Überlagerung der Drehbewegungen um die Achsen 11 und 30 bewirkt werden soll. Gleichgültig, ob eine Drehbewegung um die Achse 11 oder eine Drehbewegung um die Achse 30 bewirkt wird, findet stets eine Aufteilung der Drehmomente auf die beiden symmetrischen Getriebezweige statt.

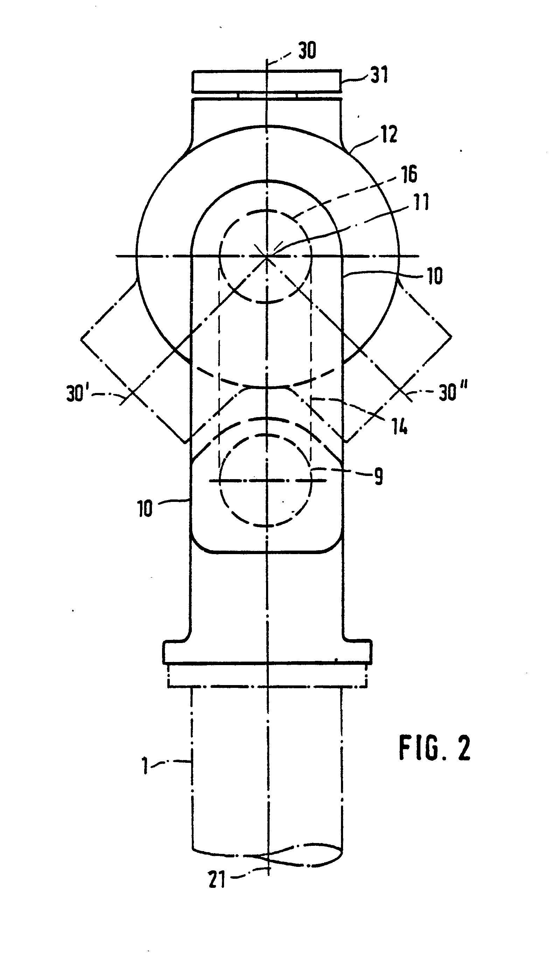

In Fig. 2 ist der Schwenkbereich des Gehäuses 12 gestrichelt dargestellt. Die beiden Extremstellungen der Achse 30 sind mit 30' und 30" bezeichnet.

## Patentansprüche

1. Vorrichtung zum Antrieb zweier Achsen eines Handgliedes eines Industrieroboters mit einem am Ende eines Gehäuseteils des Roboters gelagerten Gehäuse (12), das um eine erste Achse (11) drehbar ist, welche rechtwinklig zur Achse des Gehäuseteils verläuft, und das einen Flansch (31) lagert, der um eine zur ersten Achse (11) rechtwinklig verlaufenden zweite Achse (30) drehbar ist, bei der im Gehäuseteil zwei Antriebswellen (2, 3) verlaufen, welche über je ein Kegelradgetriebe (4, 5) je ein Untersetzungsgetriebe (19, 20) antreiben, von denen mindestens eines (20) zusammen mit seinem Abtriebsteil koaxial zur ersten Achse im Gehäuse angeordnet ist, dadurch gekennzeichnet, daß das weitere Untersetzungsgetriebe (19) ebenfalls zusammen mit seinem Abtriebsteil (22) koaxial zur ersten Achse (11) im Gehäuse (12) angeordnet ist und beide Abtriebsteile (22, 23) je ein Kegelrad (24, 25) tragen und diese Kegelräder (24, 25) mit einem weiteren im Gehäuse (12) gelagerten Kegelrad (28) in Eingriff stehen, welches mit dem Flansch (31) verbunden ist.

2. Vorrichtung nach Anspruch 1, dadurch gekennzeichnet, daß der Flansch (30) auf der Welle (32) des weiteren Kegelrades (28) angeordnet ist, deren Achse (30) die zweite Achse bildet.

3. Vorrichtung nach Anspruch 1, dadurch gekennzeichnet, daß das Auslegerende aus einem gabelförmig ausgebildeten Gehäuseteil (10) besteht und zwischen den beiden Gabelarmen das Gehäuse (12) gelagert ist.

4. Vorrichtung nach einem der Ansprüche 1 bis 3, dadurch gekennzeichnet, daß die von den Antriebswellen (2, 3) angetriebenen Kegelradgetriebe (4, 5) je eine Riemenscheibe (7, 9) antreiben, die koaxial zueinander verlaufen und die über je einen Zahnriemen (13, 14) je eine weitere Riemenscheibe (15, 16) antreiben, die auf der Eingangswelle (17, 18) des Untersetzungsgetriebes (19, 20) sitzt.

5. Vorrichtung nach Anspruch 4, dadurch gekennzeichnet, daß die Eingangswellen (17, 18) und die Untersetzungsgetriebe (19, 20) koaxial zur ersten Achse (11) angeordnet sind.

6. Vorrichtung nach Anspruch 4 oder 5, dadurch gekennzeichnet, daß die Riemenscheiben (7, 9, 15, 16) und die Zahriemen (13, 14) längs der Außenseiten der Gabelarme des Gehäuseteils (10) verlaufen.

7. Vorrichtung nach Anspruch 1, dadurch gekennzeichnet, daß die Abtriebsteile (22, 23) und ihre zugehörigen Kegelräder (24, 25) über Lagerschultern (27, 28) im Gehäuse (12) gelagert sind.

## Claims

1. A device for driving two spindles or shafts or the like of a hand member of an industrial robot, the device comprising a casing (12) which is mounted at the end of a casing part of the robot and which is rotatable around a first axis (11) extending perpendicularly to the axis of the casing part and which mounts a flange (31) rotatable around a second axis (30) disposed perpendicularly to the first axis (11), two input shafts (2, 3) being disposed in the casing part and each driving by way of respective bevel gearing (4, 5) a respective reduction transmission (19, 20), at least one (20) of which together with its output part is disposed coaxially of the first axis in the casing, characterised in that the other reduction transmission (19) is also disposed together with its output part (22) coaxially of the first axis (11) in the casing (12) and the two output elements (22, 23) each carry a bevel gear (24, 25) and the bevel gears (24, 25) mesh with another bevel gear (28) which is mounted in the casing (12) and connected to the flange (31).

2. A device according to claim 1, characterised in that the flange (31) is disposed on the shaft (32) of the other bevel gear (28) and the axis (30) of the shaft (32) is the second axis.

3. A device according to claim 1, characterised in that the swing-arm end is a forked casing part (10) and the casing (12) is mounted between the two arms of the fork.

4. A device according to any of claims 1-3, characterised in that the bevel gearings (4, 5) driven by the input shafts (2, 3) each drive a pulley (7, 9), the pulleys extending coaxially of one another and each driving by way of a respective toothed belt (13, 14) another pulley (15, 16) respectively disposed on the input shaft (17, 18) of the reduction transmission (19, 20).

5. A device according to claim 4, characterised in that the input shafts (17, 18) and the reduction transmissions (19, 20) are disposed coaxially of the first axis (11).

6. A device according to claim 4 or 5, characterised in that the pulleys (7, 9, 15, 16) and the toothed belts (13, 14) extend along the outsides of the fork arms of the casing part (10).

7. A device according to claim 1, characterised in that the output parts (22, 23) and their associated bevel gears (24, 25) are mounted in the casing (12) by way of shoulders (27, 28).

### Revendications

1. Dispositif de commande de deux axes d'une main d'un robot industriel, comportant un corps (12) qui est monté à l'extrémité d'une partie du corps du robot, peut tourner autour d'un premier axe (11) perpendiculaire à l'axe de la partie de corps et supporte une bride (31) qui peut tourner autour d'un deuxième axe (30) perpendiculaire au premier axe (11), deux arbres d'entraînement (2, 3) se trouvant dans la partie de corps et entraînant chacun un réducteur (19, 20) par l'intermédiaire d'un engrenage conique (4, 5), au moins un réducteur (20), avec son élément de sortie, étant monté dans le corps de façon que son axe coïncide avec le premier axe, caractérisé par le fait que l'autre réducteur (19), également avec son élément de sortie (22), est monté dans le corps (12) de façon que son axe coïncide avec le premier axe (11), et les éléments de sortie (22, 23) portent chacun une roue conique (24, 25) et les roues coniques (24, 25) sont en prise avec une autre roue conique (28) montée dans le corps (12) qui est jointe à la bride (31).

2. Dispositif selon la revendication 1, caractérisé par le fait que la bride (31) est montée sur l'arbre (32) de l'autre roue conique (28), dont l'axe (30) constitue le deuxième axe.

3. Dispositif selon la revendication 1, caractérisé par le fait que l'extrémité du bras est constituée d'une partie de corps (10) en forme de fourche et que le corps (12) est monté entre les deux branches de la fourche.

4. Dispositif selon l'une des revendications 1 à 3, caractérisé par le fait que les engrenages coniques (4, 5) entraînés par les arbres d'entraînement (2, 3) entraînent chacun une poulie (7, 9), les deux poulies étant coaxiales et entraînant chacune par l'intermédiaire d'une courroie crantée (13, 14) une autre poulie (15, 16) qui est montée sur l'arbre d'entrée (17, 18) d'un réducteur (19, 20).

5. Dispositif selon la revendication 4, caractérisé par le fait que les arbres d'entrée (17, 18) et les réducteurs (19, 20) sont placés de façon que leur axe coïncide avec le premier axe (11).

6. Dispositif selon l'une des revendications 4 et 5, caractérisé par le fait que les poulies (7, 9, 15, 16) et les courroies crantées (13, 14) se trouvent le long des côtés extérieurs des branches de la fourche formée par la partie de corps (10).

7. Dispositif selon la revendication 1, caractérisé par le fait que les éléments de sortie (22, 23) et les roues coniques associées (24, 25) sont montés dans le corps (12) par l'intermédiaire d'épaules de support (26, 27).

FIG. 1

FIG. 2